# EUROPÄISCHE PATENTSCHRIFT

(11) **EP 0 910 491 B1**
(45) Veröffentlichungstag und Bekanntmachung des Hinweises auf die Patenterteilung: **24.10.2001**
(21) Anmeldenummer: 98916628.5
(22) Anmeldetag: 07.05.1998
(51) Int. Cl.: B23K 11/00

(54) **VERFAHREN UND ANLAGE ZUM HERSTELLEN VON DRAHTGITTERMATTEN**
METHOD AND DEVICE FOR PRODUCING WIRE LATTICE MATS
PROCEDE ET INSTALLATION POUR LA PRODUCTION DE MATS A GRILLE METALLIQUE

(30) Priorität: 12.05.1997 AT 80197
(43) Veröffentlichungstag der Anmeldung: 28.04.1999
(73) Patentinhaber: EVG Entwicklungs- u. Verwertungs- Gesellschaft m.b.H., A-8074 Raaba (AT)
(72) Erfinder: RITTER, Klaus, A-8042 Graz (AT); RITTER, Gerhard, A-8043 Graz (AT); SCHMIDT, Gerhard, A-8042 Graz (AT)
(74) Vertreter: Holzer, Walter, Dipl.-Ing.
(86) Internationale Anmeldenummer: AT9800117
(87) Internationale Veröffentlichungsnummer: WO9851440

(56) Entgegenhaltungen:
- EP-A- 0 715 923
- US-A- 3 050 614
- US-A- 3 798 405

## Beschreibung

Die Erfindung betrifft ein Verfahren und eine Anlage zum Herstellen von Drahtgittermatten aus einander kreuzenden und an den Kreuzungspunkten mittels Schweißelektroden nach der Widerstandsschweißmethode miteinander verschweißten Längs- und Querdrähten.

Aus dem AT-GM 8062/96 sind ein Verfahren und eine Anlage zum Herstellen von Gittermatten aus einander kreuzenden und an den Kreuzungspunkten miteinander verschweißten Längs- und Querdrähten bekannt. Hierbei werden die von einem Drahtvorrat kontinuierlich vorgeschobenen Längsdrähte vor der Schweißlinie einer Gitterschweißmaschine gemeinsam mit weiteren in Bereitstellung gebrachten Längsdrähten mit ihren vorderen Enden geklemmt und vor der Schweißlinie in horizontaler Richtung quer zu ihrer Längsachse auf eine vorbestimmte Längsdrahtteilung verschoben. Vorbestimmte Längsdrähte werden gemeinsam mit Querdrähten der Schweißlinie taktweise zugeführt, vor der aus unteren und oberen Elektroden bestehenden Schweißlinie in wählbarer Länge vom Drahtvorrat abgetrennt und zu Drahtgittermatten verschweißt.

Aufgabe der Erfindung ist es, ein Verfahren sowie eine Vorrichtung der einleitend angegebenen Art zu schaffen, die eine kontinuierliche und wirtschaftliche Produktion der Drahtgittermatten mit einem möglichst geringen Verschleiß der Schweißelektroden ermöglichen. Außerdem soll eine rasche und einfache Änderung der Längsdrahtteilung und der Längsdrahtstärken ermöglicht werden.

Das erfindungsgemäße Verfahren zeichnet sich dadurch aus, daß die Längsdrähte nach einer vorbestimmten Schweißtaktanzahl vor dem Verschweißen mit den Querdrähten quer zur Vorschubrichtung der Längsdrähte relativ zu den Schweißelektroden in wählbaren Schritten horizontal gemeinsam verschoben und in den erreichten Positionen erneut festgelegt werden.

Vorzugsweise werden die Querdrähte von einem Drahtvorrat abgezogen und vor dem Abtrennen von diesem der neuen Position der verschobenen Längsdrähte entsprechend weit vorgeschoben.

Eine zur Durchführung des erfindungsgemäßen Verfahrens bestimmte Anlage mit einer Schneid- und Zuführvorrichtung für jeden Längsdraht, mit einer Schneid- und Zuführvorrichtung für jeden Querdraht und mit einer Schweißvorrichtung zum Verschweißen der Längsdrahtschar mit den Querdrähten zeichnet sich erfindungsgemäß dadurch aus, daß zum Verändern der Lage der Längsdrähte relativ zu den Schweißelektroden ein horizontal quer zur Längsdrahtvorschubrichtung in wählbaren Schritten verschiebbarer und in vorbestimmten Positionen festlegbarer Träger für die Längsdrahtzuführvorrichtung und zum Abtrennen der Querdrähte vom Drahtvorrat eine horizontal in Querdrahtrichtung synchron mit dem Träger verschiebbare Schneidvorrichtung vorgesehen sind.

Gemäß einem weiteren Merkmal der Erfindung weist die Längsdrahtzuführvorrichtung je Längsdraht eine Längsdrahtführung auf, wobei die Anzahl der Längsdrahtführungen der maximalen Anzahl der in der Schweißvorrichtung verarbeitbaren Längsdrähte entspricht.

Weitere Merkmale und Vorteile der Erfindung werden nachfolgend an einem Ausführungsbeispiel unter Bezugnahme auf die Zeichnungen näher erläutert. Es zeigen:
Fig. 1 eine Seitenansicht,
Fig. 2 eine Draufsicht,
Fig. 3 eine Vorderansicht einer erfindungsgemäßen Anlage in schematischer Darstellung, sowie die
Fig. 4a, 4b und Fig. 5a, 5b jeweils in Vorderansicht und Draufsicht zwei Schweißpositionen des Ausführungsbeispiels.

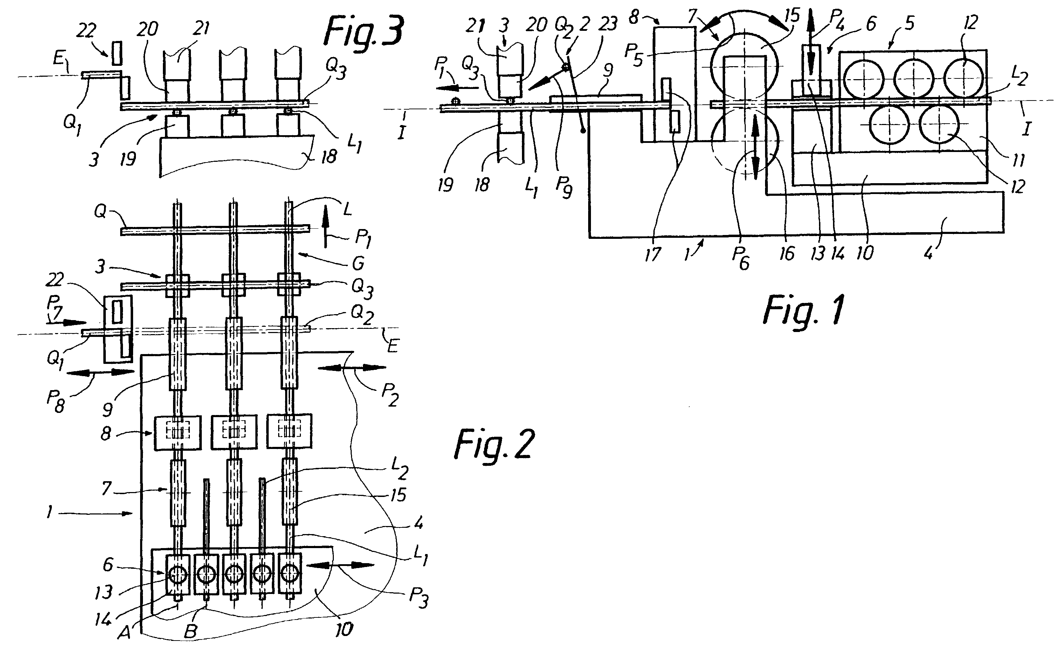

In den Fig. 1, 2 und 3 sind ausschnittsweise die für die Erfindung wesentlichen Elemente einer Gitterschweißanlage zum Herstellen von Drahtgittermatten G aus einander kreuzenden und an den Kreuzungspunkten miteinander verschweißten Längsdrähten L und Querdrähten Q dargestellt. Eine derartige Gitterschweißanlage ist beispielsweise im AT-GM 8062/96 beschrieben. Die Gitterschweißanlage weist im wesentlichen eine quer zur Flußrichtung P1 verschiebbare Längsdrahtzuführvorrichtung 1, eine Querdrahtzuführvorrichtung 2 und eine Schweißvorrichtung 3 auf.

Die Längsdrahtzuführvorrichtung 1 weist einen Träger 4 auf, der entsprechend dem Doppelpfeil P2 parallel zur Flußrichtung P1 in horizontaler Richtung verschiebbar und in ausgewählten Positionen festlegbar ist. Auf dem Träger 4 sind in Flußrichtung P1 gesehen nacheinander eine vertikale Richtvorrichtung 5, eine Längsdrahtklemmvorrichtung 6, eine Vorschubvorrichtung 7, eine Längsdrahtschneidvorrichtung 8 sowie mehrere Längsdrahtführungsrohre 9 angeordnet.

Die vertikale Richtvorrichtung 5 und die Längsdrahtklemmvorrichtung 6 sind gemeinsam auf einer entsprechend dem Doppelpfeil P3 parallel zur Flußrichtung P1 in horizontaler Richtung verschiebbaren und in ausgewählten Positionen festlegbaren Konsole 10 angeordnet. Die vertikale Richtvorrichtung 5 besteht aus mehreren Dressuren 11, die jeweils mehrere, versetzt zueinander angeordnete und relativ zueinander anstellbare Richtrollen 12 aufweisen, wobei die Achsen der Richtrollen 12 horizontal verlaufen. Die Anzahl und der Durchmesser der Richtrollen 12 sind auf die Durchmesser der zu verarbeitenden Längsdrähte L angepaßt. Die Anzahl der Dressuren 11 ist doppelt so groß wie die maximale Anzahl der in der Schweißvorrichtung 3 verschweißbaren Längsdrähte, um für Programmwechsel bei der Drahtgittermattenherstellung oder bei Störungen im Längsdrahtablauf genügend Längsdrähte in Bereitstellung zu haben. Die Längsdrahtklemmvorrichtung 6 weist mehrere Klemmelemente auf, die aus je einer Klemmbacke 13 und einem mit dieser zusammenwirkenden, entsprechend dem Doppelpfeil P3 anstellbaren Klemmstempel 14 besteht, wobei die zugehörigen Klemmelementpaare 13; 14 jeweils in Linie mit eine Dressur 11 angeordnet sind und die Anzahl der Klemmelementpaare 13; 14 der Anzahl der Dressuren 11 entspricht.

Die Vorschubvorrichtung 7 weist mehrere Vorschubelemente auf, die aus je einer entsprechend dem Doppelpfeil P5 antreibbaren Vorschubrolle 15 und mit dieser zusammenwirkenden, entsprechend dem Doppelpfeil P5 relativ zur Vorschubrolle 15 anstellbaren Anpreßrolle 16 besteht. Die Anzahl der Vorschubelemente 15; 16 entspricht der maximalen Anzahl der in der Schweißvorrichtung 3 verschweißbaren Längsdrähte L. Die Längsdrahtschneidvorrichtung 8 besteht aus mehreren Längsdrahtmesserpaaren 17, die jeweils entlang den durch die Vorschubelemente 15, 16 definierten Arbeitslinien A angeordnet sind. Die Anzahl der Arbeitslinien A und deren gegenseitiger Abstand ist durch die maximale Anzahl der in der Schweißvorrichtung 3 verschweißbaren Längsdrähte L und die kleinstmögliche Längsdrahtteilung der herzustellenden Drahtgittermatte G vorgegeben. Je Arbeitslinie A ist ein Längsdrahtführungsrohr 9 vorhanden.

Die Schweißvorrichtung 3 arbeitet nach der Widerstandsschweißmethode und weist einen unterhalb der Ebene der Längsdrahtschar I-I angeordneten Elektrodenbalken 18 auf, der eine Reihe von unteren Schweißelektroden 19 trägt. Mit den unteren Schweißelektroden 19 wirken obere Schweißelektroden 20 zusammen, die jeweils in einem oberen Elektrodenhalter 21 oberhalb der Ebene der Längsdrahtschar I-I angeordnet sind. Die Schweißvorrichtung 3 kann im Rahmen der Erfindung nach dem Einzelpunkt- oder dem Doppelpunktschweißverfahren arbeiten.

Von einem nicht dargestellten Drahtvorrat wird der Querdraht Q1 in einer Querdrahteinschußlinie E entsprechend dem Pfeil P7 seitlich der Schweißvorrichtung 3 zugeführt und mit Hilfe einer entsprechend dem Doppelpfeil P8 in Querdrahtrichtung horizontal verschiebbaren Querdrahtschere 22 vom Drahtvorrat abgetrennt. Die Querdrahtzuführvorrichtung 2 weist mehrere, zwischen die Längsdrähte greifende Zuführelemente 23 auf, die den vom Drahtvorrat abgetrennten Querdraht Q2 in die durch die Reihen von unteren und oberen Schweißelektroden 19; 20 definierte Schweißlinie der Schweißvorrichtung 3 entsprechend dem Pfeil P9 zuführen.

Zum synchronen Ansteuern und Positionieren der verschiebbaren Vorrichtungen 4, 10, 22 ist eine entsprechende Steuereinheit vorgesehen.

Die beschriebene Anlage arbeitet in folgender Weise:

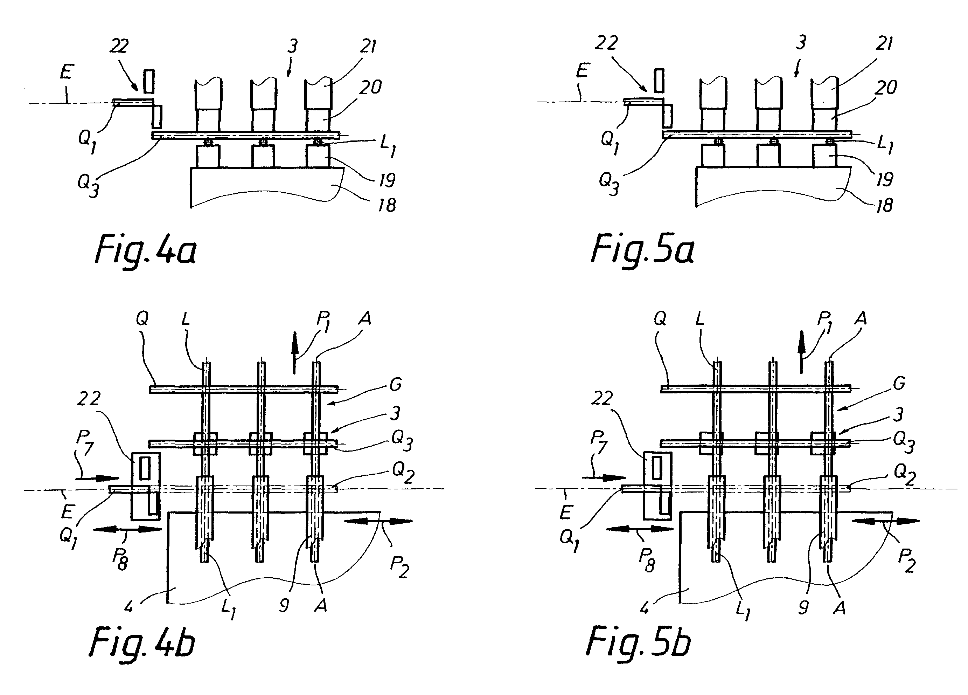

Die zum Herstellen der Drahtgittermatte G benötigten Längsdrähte L1 werden entlang der Arbeitslinie A vom nicht dargestellten Drahtvorrat, vorzugsweise über einen Pufferspeicher in Flußrichtung P1, d.h. in Längsdrahtvorschubrichtung abgezogen, in den Dressuren 11 der vertikalen Richtvorrichtung 5 geradegerichtet und von den Vorschubrollen 15 der Vorschubvorrichtung 7 durch die Längsdrahtführungsrohre 9 in die Schweißvorrichtung 3 taktweise eingeschoben. Die nicht benötigten, sich in einer Bereitstellungslinie B befindlichen Längsdrähte L2 werden von ihren zugehörigen Klemmelementpaaren 13, 14 der Längsdrahtklemmvorrichtung 6 festgeklemmt (Fig. 2). Von einem Drahtvorrat wird der Querdraht Q1 in der Querdrahteinschußlinie E entsprechend dem Pfeil P7 seitlich der Schweißvorrichtung 3 zugeführt und mit Hilfe der Querdrahtschere 22 vom Drahtvorrat abgetrennt. In der Schweißvorrichtung 3 werden die Längsdrähte L1 mittels der Schweißelektroden 19, 20 taktweise mit dem aus der Querdrahteinschußlinie E zugeführten Querdraht Q3 verschweißt. Im Rahmen der Erfindung ist es auch möglich, den Querdraht Q2 direkt in die Schweißlinie der Schweißvorrichtung 3 einzuführen. Die oben beschriebene Schweißposition ist schematisch in den Fig. 4a und 4b dargestellt. Diese Arbeitstakte wiederholen sich solange bis die Drahtgittermatte G fertig gestellt ist.

Zum Verändern der Lage der Längsdrähte L1 relativ zu den Schweißelektroden 19, 20 wird nach einer wählbaren Anzahl von Arbeitstakten und vor einem erneuten Vorschieben der Längsdrahtschar L1 und des Querdrahtes Q1 der Träger 4 mit der Längsdrahtzuführvorrichtung 1 und die Querdrahtschere 22 synchron und gleichsinnig in Schritten wählbarer Länge horizontal entsprechend einer Richtung des Doppelpfeiles P3 bzw. P8 quer zur Flußrichtung P1 verschoben. Gleichzeitig muß der Vorschub der Querdrähte Q1 an die Verschiebung der Längsdrähte L1 angepaßt werden, d.h. je nach Verschieberichtung müssen die Querdrähte Q1 mehr oder weniger weit vorgeschoben werden. Im Rahmen der Erfindung ist es jedoch auch möglich, die Vorschubvorrichtung für die Querdrähte Q1 gemeinsam mit der Querdrahtschere 22 zu verschieben, so daß das Anpassen der Vorschublänge der Querdrähte Q1 an die Verschiebung der Längsdrähte L1 nicht erforderlich ist.

Beim dargestellten Beispiel wurde die durch die Vorschubelemente 15, 16 der Vorschubvorrichtung 7, durch die Längsdrahtmesserpaare 17 und durch die Längsdrahtführungsrohre 9 je Längsdraht L1 definierte Arbeitslinie A derart seitlich verschoben, daß die Längsdrähte L1 nunmehr die in den Fig. 5a und 5b dargestellte Schweißposition einnehmen. Die Anzahl der Arbeitstakte ohne Verschiebung der Arbeitslinien A hängt von den Schweißbedingungen, insbesondere vom möglichen Verschleiß der Schweißelektrodenoberflächen beim Schweißvorgang ab.

Die Schrittlänge und die Richtung der Verschiebung werden derart gewählt, daß nach jeder Verschiebung die Arbeitslinien A und damit die Schweißpositionen auf einer anderen Stelle der Oberfläche der Schweißelektroden 19,20 verlaufen. Die Querdrahtschere 22 muß synchron mit der Längsdrahtzuführvorrichtung 1 verschoben werden und die Vorschublänge der Querdrähte Q1 verändert werden, um die Relativlage der Querdrähte Q3 zu den Längsdrähten L1 unverändert zu lassen und dadurch gleichbleibende Querdrahtüberstände an beiden Rändern der Drahtgittermatte G zu gewährleisten. Durch diese Verschiebungen der Arbeitslinien A wird vermieden, daß das Verschweißen der Längs- und Querdrähte, wie bisher üblich immer an derselben Stelle der Schweißelektrodenoberflächen stattfindet und die Schweißelektroden nur an einer Stelle abgenutzt werden, während die übrige Oberfläche der Schweißelektroden ungenutzt bleibt. Durch einseitige Abnutzung und einseitiges Einbrennen der Schweißelektroden wird außerdem die Qualität der Schweißverbindung beeinträchtigt. Durch die erfindungsgemäßen Verschiebungen der Schweißpositionen innerhalb der Schweißelektrodenoberflächen wird eine gleichbleibende Qualität der Schweißverbindung gewährleistet und die Oberflächen der Schweißelektroden werden gleichmäβig abgenutzt, wodurch die Lebensdauer der Schweißelektroden erheblich gesteigert wird.

Weitere Drahtgittermatten können unmittelbar anschließend hergestellt werden, indem erneut Längsdrähte L1 der Schweißvorrichtung 3 zugeführt werden. Im Rahmen der Erfindung ist es hierbei möglich, die Längsdrähte entweder jeweils von demselben Drahtvorrat abzuziehen, der auch die vorher hergestellte Drahtgittermatte mit Längsdrähten versorgt hat, oder teilweise oder zur Gänze die in der Bereitstellungslinie B befindlichen Längsdrähte L2 in die Arbeitslinie A zu positionieren. Hierbei wird die Längsdrahtklemmvorrichtung 6 zusammen mit der Richtvorrichtung 5 durch Verschiebung in horizontaler Richtung entsprechend dem Doppelpfeil P2 neu positioniert. Durch diese Vorgangsweise können ohne Produktionsunterbrechung und ohne Verschweißen der Längsdrähte ein leerer Drahtvorrat schnell ersetzt, sowie in einfacher Weise die Längsdrahtteilung sowie die Durchmesser der Längsdrähte der herzustellenden Drahtgittermatten verändert werden.

Im Rahmen der Erfindung ist es möglich, das Verschieben der Arbeitslinien A erst nach Fertigstellung einer oder auch mehrerer Drahtgittermatten durchzuführen.

Wird der in der Arbeitslinie A befindliche Längsdraht L1 für die Herstellung folgender Drahtgittermatten nicht mehr benötigt, wird nach dem Abtrennen dieses Längsdrahtes L1 vom Drahtvorrat das vordere Ende des Drahtvorrates mit Hilfe der Vorschubvorrichtung 7 aus der Längsdrahtschneidvorrichtung 8 zurückgezogen, mittels der Längsdrahtklemmvorrichtung 6 festgeklemmt und durch Querverschiebung entsprechend dem Doppelpfeil P2 auch aus der Vorschubvorrichtung 7 seitlich herausgefahren, so daß dieser Längsdraht in die Bereitstellungslinie B gelangt und dort festgelegt wird.

Die Längsdrahtschneidvorrichtung 8 ermöglicht außerdem ein Abtrennen einzelner Längsdrähte während des Schweißens der Drahtgittermatte G, so daß es möglich ist, individuelle gestaltete Drahtgittermatten mit unterschiedlich langen Längsdrähten innerhalb einer Drahtgittermatte und auch Drahtgittermatten mit Unterbrechungen in den Längsdrähten herzustellen.

Es versteht sich, daß das dargestellte Ausführungsbeispiel im Rahmen des allgemeinen Erfindungsgedankens verschiedentlich, insbesondere hinsichtlich der Ausgestaltung der Längsdrahtzuführvorrichtung, abgewandelt werden kann. Die Längsdrähte können sowohl direkt von einem endlosen Drahtvorrat, beispielsweise über einen Pufferspeicher, als auch in Form von gerichteten, abgelängten Stäben den Längsdrahtführungsrohren zugeführt werden, wobei die Längsdrahtschneidvorrichtung vor den Längsdrahtführungsrohren entfallen kann. In die Längdrahtführungsrohre können im Rahmen der Erfindung auch zwei Längsdrähte als sogenannte Doppeldrähte eingeführt werden. In allen Fällen muß jedoch die Verschiebbarkeit der Längsdrahtführungsrohre quer zur Längsdrahtvorschubrichtung gewährleistet sein.

Des weiteren ist es im Rahmen der Erfindung möglich, daß die Querdrahteinschußlinie E unterhalb und/oder oberhalb der Ebene der Längsdrahtschar I-I und in Längsdrahtvorschubrichtung P1 gesehen sowohl vor als auch hinter der Schweißlinie verläuft. Die Zufuhr des Querdrahtes kann im Rahmen der Erfindung sowohl von einer Seite der Schweißvorrichtung 3 als auch von beiden Seiten entlang der Querdrahteinschußlinie E erfolgen. In die Querdrahteinschußlinie E können im Rahmen der Erfindung auch zwei Querdrähte, als sogenannte Doppeldrähte, eingeführt werden.

Des weiteren ist es im Rahmen der Erfindung möglich, zur Erhöhung der Produktionsgeschwindigkeit zwei Querdrahteinschußlinien E und zwei Schweißlinien vorzusehen, so daß die Schweißvorrichtung 3 im in Längsdrahtrichtung arbeitendem Doppelpunktschweißverfahren arbeiten kann.

## Patentansprüche

1. Verfahren zum Herstellen von Drahtgittermatten aus einander kreuzenden und an den Kreuzungspunkten mittels Schweißelektroden nach der Widerstandsschweißmethode miteinander verschweißten Längs- und Querdrähten, **dadurch gekennzeichnet, daß** die Längsdrähte (L1, L2) nach einer vorbestimmten Schweißtaktanzahl vor dem Verschweißen mit den Querdrähten (Q1) quer zur Vorschubrichtung (P1) der Längsdrähte relativ zu den Schweißelektroden (19,20) in wählbaren Schritten horizontal gemeinsam verschoben und in den erreichten Positionen erneut festgelegt werden.

2. Verfahren nach Anspruch 1, **dadurch gekennzeichnet, daß** die Querdrähte (Qi) von einem Drahtvorrat abgezogen und vor dem Abtrennen von diesem der neuen Position der verschobenen Längsdrähte (L1, L2) entsprechend weit vorgeschoben werden.

3. Anlage zum Durchführen des Verfahrens nach Anspruch 1 oder 2, mit einer Schneid- und Zuführvorrichtung für jeden Längsdraht, mit einer Schneid- und Zuführvorrichtung für jeden Querdraht und mit einer Schweißvorrichtung zum Verschweißen der Längsdrahtschar mit den Querdrähten, **dadurch gekennzeichnet, daß** zum Verändern der Lage der Längsdrähte (L1, L2) relativ zu den Schweißelektroden (19, 20) ein horizontal quer zur Längsdrahtvorschubrichtung (P1) in wählbaren Schritten verschiebbarer und in vorbestimmten Positionen festlegbarer Träger (4) für die Längsdrahtzuführvorrichtung (1) und zum Abtrennen der Querdrähte (Q1) vom Drahtvorrat eine horizontal in Querdrahtrichtung (P8) synchron mit dem Träger (4) verschiebbare Schneidvorrichtung (22) vorgesehen sind.

4. Anlage nach Anspruch 3, **dadurch gekennzeichnet, daß** die Längsdrahtzuführvorrichtung (1) je Längsdraht (L1) eine Längsdrahtführung (9) aufweist, wobei die Anzahl der Längsdrahtführungen (9) der maximalen Anzahl der in der Schweißvorrichtung (3) verarbeitbaren Längsdrähte (L1) entspricht.

5. Anlage nach Anspruch 3 oder 4, **dadurch gekennzeichnet, daß** jeder Längsdrahtführung (9) eine Längsdrahtschneidvorrichtung (8) und eine Vorschubvorrichtung (7) mit in beiden Richtungen antreibbaren Vorschubrollen (15) vorgeschaltet ist.

6. Anlage nach einem der Ansprüche 3 bis 5, **dadurch gekennzeichnet, daß** jeder Längsdrahtführung (9) zumindest ein Klemmelementpaar (13, 14) und eine Dressur (11) zugeordnet sind, wobei alle Klemmelementpaare (13, 14) und alle Dressuren (11) auf einer Konsole (10) angeordnet sind, die auf dem Träger (4) horizontal quer zur Längsdrahtvorschubrichtung (P1) in wählbaren Schritten verschiebbar und in vorbestimmten Positionen festlegbar ist.

7. Anlage nach Anspruch 6, **dadurch gekennzeichnet, daß** die Anzahl der Klemmelementpaare (13, 14) und der Dressuren (11) doppelt so groß wie die Anzahl der Längsdrahtführungen (9) ist.

## Claims

1. Method for the manufacture of wire mesh mats from longitudinal and transverse wires which intersect with each other and are welded together at the points of intersection by means of welding electrodes by the resistance welding method, **characterised in that** the longitudinal wires (L1, L2) after a predetermined number of welding strokes before welding to the transverse wires (Q1, Q2, Q3) are displaced together horizontally in selectable steps transversely to the direction of advance (P1) of the longitudinal wires relative to the welding electrodes (19, 20) and are fixed again in the positions reached.

2. Method according to claim 1, **characterised in that** the transverse wires (Q1, Q2, Q3) are taken off a wire supply and, before separation from the latter, advanced by a distance corresponding to the new position of the displaced longitudinal wires (L1, L2).

3. Apparatus for carrying out the method according to claim 1 or 2, with a cutting and supply device for each longitudinal wire, with a cutting and supply device for each transverse wire and with a welding device for welding the longitudinal wire assembly to the transverse wires, **characterised in that** for altering the position of the longitudinal wires (L1, L2) relative to the welding electrodes (19, 20) a support (4) which can be displaced in selectable steps horizontally transversely to the direction of longitudinal wire advance (P1) and fixed in predetermined positions is provided, and for separation of the transverse wires (Q1) from the wire supply a cutting device (22) which can be displaced horizontally in the transverse wire direction (P8) synchronously with the support (4) is provided.

4. Apparatus according to claim 3, **characterised in that** the longitudinal wire supply device (1) comprises one longitudinal wire guide (9) to each longitudinal wire (L1), wherein the number of longitudinal wire guides (9) corresponds to the maximum number of longitudinal wires (L1) which can be processed in the welding device (3).

5. Apparatus according to claim 3 or 4, **characterised in that** in front of each longitudinal wire guide (9) are a longitudinal wire cutting device (8) and an advance device (7) with advance rollers (15) which can be driven in both directions.

6. Apparatus according to any of claims 3 to 5, **characterised in that** each longitudinal wire guide (9) is assigned at least one pair of clamping elements (13, 14) and one finishing device (11), wherein all the pairs of clamping elements (13, 14) and all the finishing devices (11) are arranged on a bracket (10) which can be displaced in selectable steps on the support (4) horizontally transversely to the direction of longitudinal wire advance (P1) and fixed in predetermined positions.

7. Apparatus according to claim 6, **characterised in that** the number of pairs of clamping elements (13, 14) and of finishing devices (11) is twice as great as the number of longitudinal wire guides (9).

## Revendications

1. Procédé pour la production de mats de grillage métallique à partir de fils longitudinaux et transversaux s'entrecroisant et soudés entre eux aux points de croisement selon le procédé de soudure par résistance au moyen d'électrodes de soudage, **caractérisé en ce que** les fils longitudinaux (L1,L2) sont déplacés selon des pas sélectionnables horizontalement en semble selon un nombre de passes de soudure prédéterminé avant le soudage avec les fils transversaux (Q1) transversalement au dispositif d'alimentation (P1) des fils longitudinaux par rapport aux électrodes de soudage (19,20) et sont à nouveau fixés dans les positions atteintes.

2. Procédé selon la revendication 1, **caractérisé en ce que** les fils transversaux (Q1) sont prélevés à partir d'une réserve de fils et avant la séparation de celle-ci, avancés de façon correspondante de la nouvelle position des fils longitudinaux déplacés (L1, L2).

3. Installation pour l'exécution du procédé selon la revendication 1 ou 2, avec un dispositif d'amenée et de coupe pour chaque fil longitudinal, avec un dispositif d'amenée et de coupe pour chaque fil transversal et avec un dispositif de soudage pour la soudure du groupe de fils longitudinaux avec les fils transversaux, **caractérisé en ce que** pour modifier la position des fils longitudinaux (L1, L2) par rapport aux électrodes de soudage (19,20) il est prévu un support (4) pour le dispositif d'amenée de fils longitudinaux (1), pouvant être fixé en des positions prédéterminées et déplaçable horizontalement, transversalement au dispositif d'alimentation de fils longitudinaux (P1) selon des pas sélectionnables et pour la séparation des fils transversaux (Q1) de la réserve de fils un dispositif de coupe (22) déplaçable horizontalement dans la direction des fils transversaux (P8) de façon synchronisée avec le support (4).

4. Installation selon la revendication 3, **caractérisée en ce que** le dispositif d'amenée de fils longitudinaux (1) présente par fil longitudinal (L1) un guidage de fils longitudinaux (9), le nombre de guidages de fils longitudinaux (9) correspondant au nombre maximum de fils longitudinaux (L1) pouvant être traités dans le dispositif de soudage (3).

5. Installation selon la revendication 3 ou 4 **caractérisée en ce qu'**en amont de chaque guidage de fil longitudinal (9) est disposé un dispositif de coupe de fils longitudinaux (8) et un dispositif d'alimentation (7) avec des rouleaux d'alimentation (15) pouvant être commandés dans les deux directions.

6. Installation selon l'une des revendications 3 à 5, **caractérisée en ce qu'**à chaque guidage de fils longitudinaux (9) sont affectés au moins une paire d'éléments de serrage (13,14) et un dressage (11), toutes les paires d'éléments de serrage (13,14) et tous les dressages (11) étant disposés sur une console (10) qui est déplaçable sur le support (4) horizontalement, transversalement par rapport au dispositif d'alimentation de fils transversaux (P1) selon des pas sélectionnables et peuvent être fixés dans des positions prédéterminées.

7. Installation selon la revendication 6, **caractérisée en ce que** le nombre de paires d'éléments de serrage (13,14) et de dressages (11) est égal au double du nombre de guidages de fils longitudinaux (9).
